# EUROPÄISCHE PATENTSCHRIFT

(11) **EP 0 819 160 B1**
(45) Veröffentlichungstag und Bekanntmachung des Hinweises auf die Patenterteilung: **12.05.1999**
(21) Anmeldenummer: 96908104.1
(22) Anmeldetag: 20.03.1996
(51) Int. Cl.: C11B 1/10, A23J 1/14

(54) **VERFAHREN ZUR GEWINNUNG VON ÖLEN ODER FETTEN AUS ÖLHALTIGEN NATURSTOFFEN UND IHRE VERWENDUNG**
PROCESS FOR EXTRACTING OILS OR FATS FROM OLEAGINOUS NATURAL SUBSTANCES AND USE THEREOF
PROCEDE DE PRODUCTION D'HUILES OU GRAISSES A PARTIR D'OLEAGINEUX

(30) Priorität: 04.04.1995 DE 19512577
(43) Veröffentlichungstag der Anmeldung: 21.01.1998
(73) Patentinhaber: trenntec trenntechnik gmbh, 50354 Hürth (DE)
(72) Erfinder: TYDIKS, Bernd, D-41464 Neuss (DE)
(74) Vertreter: Sieckmann, Ralf, Dr.
(86) Internationale Anmeldenummer: EP9601240
(87) Internationale Veröffentlichungsnummer: WO9631579

(56) Entgegenhaltungen:
- GB-A- 388 966
- US-A- 3 878 232
- US-A- 4 211 695
- DATABASE WPI Week 8815 Derwent Publications Ltd., London, GB; AN 88-103760 XP002007467 & SU,A,1 333 702 (TASHKENT POLY) , 30.August 1987
- DATABASE WPI Week 8813 Derwent Publications Ltd., London, GB; AN 88-088338 XP002007468 & JP,A,63 039 601 (NAKAZONO S) , 20.Februar 1988 & PATENT ABSTRACTS OF JAPAN vol. 12, no. 252 (C-512), 15.Juli 1988 & JP,A,63 039601 (SHUZO NAKAZONO), 20.Februar 1988,
- DATABASE WPI Week 8928 Derwent Publications Ltd., London, GB; AN 89-204761 XP002007469 & SU,A,1 449 573 (TASHKENT POLY) , 7.Januar 1989 in der Anmeldung erwähnt
- DATABASE WPI Week 8816 Derwent Publications Ltd., London, GB; AN 88-110151 XP002007470 & SU,A,1 335 564 (TASHKENT POLY) , 7.September 1987 in der Anmeldung erwähnt
- DATABASE WPI Week 9348 Derwent Publications Ltd., London, GB; AN 93-378089 XP002007471 & CN,A,1 068 360 (UNIV HUNAN TEACHERS) , 27.Januar 1993
- DATABASE WPI Week 8135 Derwent Publications Ltd., London, GB; AN 81-6374D XP002007472 & SU,A,787 376 (KIEV FOOD IND TECHN) , 16.Dezember 1980

## Beschreibung

Die vorliegende Erfindung betrifft ein Verfahren zur Gewinnung von Ölen oder Fetten aus ölhaltigen Naturstoffen sowie die Weiterverarbeitung der hierbei erzeugten Produkte.

Wesentliches Merkmal der heute üblichen Technik zur Gewinnung von Ölen und Fetten aus ölhaltigen Naturstoffen, beispielsweise ölreichen Saaten (Raps, Sonnenblumen, Erdnuß, Lein, Rizinus) ist die Kombination von Pressen und Extrahieren. Es werden hierbei die folgenden Verfahrensschritte eingesetzt:

Vorreinigen, eventuell Schälen, Zerkleinern mittels eines Walzwerks, Konditionieren mit Dampf, Flockieren in einem Walzwerk, Pressen, Extrahieren, Filtrieren der Miscella, Destillation der Miscella, welches ein Verdampfen des Lösungs- bzw. Extraktionsmittels bewirkt, Toasten des Extraktionskuchens oder Schrots, wodurch ein Austreiben des Lösemittels erfolgt. Demgegenüber wird die Ölgewinnung aus ölarmen Saaten, beispielsweise Soja oder Baumwolle, im allgemeinen nur mittels Extraktion, d. h. nur mit den oben aufgeführten Verfahrensschritten, jedoch ohne ein Vorpressen, durchgeführt. Üblicherweise erfolgt die Aufarbeitung des Extraktionsmittel enthaltenden Schrots in der Weise, daß der ölfreie Schrot aus dem Extraktor in eine Vorrichtung mit der Bezeichnung Desolventizer-Toaster/Trockner/Kühler überführt wird, wo der Schrot vom Extraktionsmittel befreit wird, thermisch behandelt sowie anschließend getrocknet und gekühlt wird. Üblicherweise enthält der Schrot aus der Lösemittelextraktion noch etwa 25 bis 35 % Extraktionsmittel, wie sich beispielsweise aus dem Handbuch der Lebensmitteltechnologie, Teilband Nahrungsmittel, Fette und Öle, von Michael Bockisch, S. 338 ff., aus dem Jahre 1993, ergibt. Bei diskontinuierlichen Anlagen wird das Abtreiben des Extraktionsmittels im Extraktor selbst durchgeführt, bei kontinuierlich arbeitenden Anlagen in speziellen Apparaturen, die beispielsweise aus mehreren übereinander liegenden waagerechten Rohren, die Doppelmäntel aufweisen, bestehen. Dort wird das Schrot über einen Einlaß von einer in das Rohr eingebauten Schnecke gefördert und fällt jeweils am Ende der Förderschnecke in das darunter liegende Rohr. Üblicherweise sind auf diese Weise vier derartige Rohre mit eingebauten Schnecken hintereinander geschaltet. Der Doppelmantel dieses Transportrohrs selbst wird mit Dampf beheizt, so daß der Schrot auf etwa 100 °C erhitzt wird. Das ausgetriebene Extraktionsmittel, die sogenannte Brüden, werden kondensiert und in den Extraktionskreislauf rückgeführt (vgl. Abb. 5.70).

Neuere Anlagen zur Aufarbeitung des Schrots und zu Abtrennung des Extraktionsmittels bestehen aus einem vertikalen Behälter, der mehrere horizontale Böden hat. Das mit Extraktionsmittel beladene Schrot wird, wie in Abbildung 5.71 der vorstehend genannten Literaturstelle gezeigt, mittels einer Schnecke oder eines Kettenförderers aufgegeben und fällt auf den ersten Boden. Die Böden werden mit Rührarmen überstrichen, die das Schrot jeweils über die abweichend innen und außen liegenden Spalte nach unten auf den nächsten Boden fördem. Vom untersten Boden werden sie mit einer Schnecke ausgetragen. Durch immer längeren Kontakt mit den dampfbeheizten Wänden und Böden des Desolventizers (Entbenziners) erwärmt sich die extrahierte Saat kontinuierlich, und das Extraktionsmittel verdampft. Im untersten Boden wird oftmals Dampf injiziert, der letzte Reste des Extraktionsmittels austreibt und mit dessen Dämpfen abgeht. Die Dämpfe werden kondensiert, getrennt und das Extraktionsmittel wiederverwendet. Läßt man in den untersten Boden keinen Dampf ein, muß die Zahl der Böden zur Erzielung derselben Leistung um mindestens drei erhöht werden. Wird über ein und denselben Apparat nicht nur das Lösungsmittel abgezogen, sondern auch der Toastungsprozeß durchgeführt, so spricht man von Desolventizer-Toaster. Für den Durchsatz durch den Desolventizer/Toaster ist mit einer Verweilzeit von 20 min bis 90 min zu rechnen. Dies ist insofern nachteilig, daß hierdurch ein limitierter Massendurchsatz erreicht wird. Wie sich aus der vorstehenden Übersicht ergibt, sind sowohl ältere Anlagen zur Abtrennung des Extraktionsmittels wie auch die heute verwendeten Desolventizer durch die Vielzahl der verwandten Rohre mit eingebauten Schnecken bzw. der vielschichtigen Böden recht kompliziert aufgebaut und benötigen eine große Menge an Energie für das Rühren bzw. Transportieren sowie für die Erhitzung des extraktionsmittelhaltigen Schrots.

Aus der Zeitschrift ,,Fat Science and Technology", Band 91, Seite 583 f., 1989, ist offenbart, eine Extraktion in einer Rotor/Stator-Vorrichtung zusammen mit einem Lösemittel durchzuführen, wobei sowohl die notwendige Zerkleinerung der Ölsaaten wie auch eine intensive Durchmischung mit dem Lösemittel unter ständiger Grenzflächenerneuerung und damit des notwendigen Stoffaustauschs stattfindet. Hierbei wird das mit Öl beladene Lösemittel in einem Trennaggregat abgetrennt, und je nach erreichbarer Ausbeute muß diese Verfahrensfolge bis zu fünfmal wiederholt werden. Der Extraktionsrückstand verläßt die Trennvorrichtung mit einem Extraktionsmittelanteil von etwa 30 bis 35%, der dann in einem Desolventizer-Toaster in üblicher Art und Weise vom restlichen Extraktionsmittel entfernt wird. Die dort beschriebene Rotor-Stator-Vorrichtung ist auch Gegenstand des deutschen Patents 37 35 458 sowie der entsprechenden europäischen Patentanmeldung EP-A-0 312 855.

Die DE-OS 24 03 053 betrifft eine Vorrichtung, mittels der eine Suspension aus einem hochquellfähigen Stoff wie einem Verdickungsmittel auf Basis von Polysacchariden oder einem Bentonit mittels eines Kreiselgeräts mit radialen, nacheinander folgenden Zahnkränzen zu einer Suspension umgesetzt werden kann.

Die GB-A-2 005 526 betrifft ein Verfahren zur Behandlung von Rapssaat oder Senfsaat zur Gewinnung einer Ölfraktion und einer proteinreichen Mehlfraktion durch Zerkleinerung der Saat und Vorpreßung zur Erzeugung eines Mehls und Hülsen enthaltenden Vorschrots, Bildung einer Suspension des Vorschrots in einer nichtwäßrigen Flüssigkeit, die als Nichtlösemittel für den Proteinanteil des Schrots wirkt, gegebenenfalls Anpassen des Feuchtigkeitsgehalts des Vorschrots in der Suspension und gegebenenfalls Anpassung der Partikelgröße, Zentrifugation dieser Vorschrotsuspension zur Erzeugung einer Mehlslurry im Überlauf und einer Hülsenslurry im Unterlauf, Trennung des Lösemittels aus jedem der Slurries und Gewinnung aus den jeweiligen vorgenannten Schritten einer Ölfraktion, einer Mehlfraktion und einer Hülsenfraktion als einzelne Produkte. Vorzugsweise wird das Verfahren in dem vorgenannten Zentrifugationsschrittt in der Weise durchgeführt, daß der Partikeldurchmesser des Vorschrots in der Suspension, die einer Flüssigseperation zugeführt wird, derartig ist, daß sie durch ein 200-Tyler-Meshnetz geht (Anspruch 7).

Diesem Stand der Technik liegt die Aufgabe zugrunde, das vorgenannte Verfahren zur Verfügung zu stellen, bei dem eine Suspension mit einem Feststoffanteil von 5 bis 33 Gew.-% einer Abtrennung der Flüssigkeit durch Zentrifugaltion oder Schwerkraft ausgesetzt werden. Im Gegensatz zur vorliegenden Erfindung können hierzu allerdings ausschließlich Dekanter eingesetzt werden, was sich auch aus Anspruch 3 dieses Standes der Technik ergibt. Die in diesem Stande der Technik eingesetzten Dekanterzentrifugen unterscheiden sich aber als Phasentrennungsmedien von denen gemäß vorliegender Erfindung beanspruchten Zentrifugen, bei denen nicht eine Vorschrotsuspension sondern vielmehr ein lösemittelfeuchter Schrot selbst von einer überschüssigen Restfeuchte befreit werden soll. Durch das im Stand der Technik vorbeschriebene Dekantierungsverfahren mittels einer Dekanterzentrifuge oder eines Zyklons, bei denen offensichtlich ein 3 bis 20facher Überschuß an Lösemittel ausgetrieben werden soll, wird allerdings der Gegenstand der vorliegenden Erfindung für den Fachmann nicht nahegelegt einen 3fach oder noch geringeren Unterschuß aus dem Schrot zu entfernen. Dieses Dekantieren als einzige Ausführungsform in diesem Stand der Technik zieht sich wie ein roter Faden durch die entsprechenden graphischen Übersichten und auch durch die Ausführungsbeispiele.

Derwent Abstract 94-240454/29, eine Zusammenfassung der SU 1814654-A3, betrifft eine Ölextraktion einer Kaffeeslurry oder anderen Kaffeeabfällen, welches eine wenigstens einfache Vorbehandlung der Rohmaterialien mit Ethanol vorsieht. Diese Vorbehandlung schließt die Extraktion durch Filtration oder Zentrifugation und Destillation des Extraktionsmittel aus dem Öl ein, aber auch hierbei kann es sich bei der Zentrifugation nur um ein Dekantieren handeln, da wiederum der Ethylalkohol in Bezug auf die Festkomponenten in der Slurry in einem 3- bis 5fachen Überschuß eingesetzt wird. Aus diesem Grunde legt auch diese Druckschrift nicht nahe, im Rahmen eines Verfahrens zur Gewinnung von Ölen und Fetten aus ölhaltigen Naturstoffen, für die Entfernung des Extraktionsmittels aus dem Schrot eine Filterzentrifuge einzusetzen.

Derwent Abstract 88-110151/16, eine Zusammenfassung der SU 1335-564-A, betrifft die Entfernung von Lösemittel aus dem Ölkuchen, bei denen der Ölkuchen (Schrot) zusätzlich einer Vorbehandlung mit einer niedrig siedenden Benzinfraktion oder Petrolether für 2 bis 4 Minuten unterzogen wird und daraufhin für 40 bis 60 Sekunden zentrifugiert wird. Ebenso wie in dem vorgenannten Stand der Technik wird hier also wiederum ein Überschuß an Lösemittel verwandt und als Zentrifuge dient ausschließlich eine Filterzentrifuge oder Dekanterzentrifuge. Darüber hinaus scheint dieses Verfahren auch insofern nachteilig zu sein, daß es sich hierbei ersichtlich um einen Batchprozeß handelt, der nicht wie die vorliegende Erfindung auch kontinuierlich betrieben werden kann. Da der Abstract nicht allzu verständlich ist, hat sich die Anmelderin den zugrunde liegenden Urheberschein besorgt. Hieraus ergibt sich ein wenig klarer, daß Gegenstand des Urheberscheins (4) gemäß Patentanspruch 1 ein Verfahren zur Entfernung des Lösemittels aus dem Schrot mittels Verdampfen ist, wobei der Schrot zur Senkung des Ölverlustes und zur Erhöhung der Schrotqualität vor dem Verdampfen des offenbar höher siedenden Lösemittels 2 bis 4 Minuten mit einem niedrig siedenden Lösemittel bis zu einem Benzingehalt von 40 bis 45 % behandelt und anschließend für 40 bis 60 Sekunden zentrifugiert wird. Aus der Beschreibung, insbesondere aber den Ausführungsbeispielen ergibt sich klar, daß hier für ein Behandlungsverfahren zur Gewinnung von Ölen aus ölhaltigen Naturstoffen ein zusätzlicher Extraktionsschritt mit Lösemittel eingesetzt wird, um höher siedendes Lösemittel auszulösen. Hierzu verwendet man, wie auf der Seite 1 und 2 mit der Bezugsziffer 3 angedeutet, eine Filterzentrifuge, wobei der aus dem Extrakt austretende Schrot mit dem darin enthaltenden Lösemittel in den geneigten, hermetisch dichten Schneckenaufgeber 1 geleitet wird, wo eine zusätzliche Lösemittelbehandlung (Lösemittel Leichtbenzin oder Petrolether) von 2-4 Minuten erfolgt. In dem hermetischen Schneckenaufgeber wird der Schrot mit Benzin begossen, das über die Düse 2 zugegeben wird. Anschließend wird der behandelte Schrot mit einem Benzingehalt von 40 bis 45 % in die Filterzentrifuge geleitet, wo unter dem Druck der Fliehkraft im Verlauf von 40 bis 60 Sekunden eine Zwangsfiltrierung von Material (Schrot) enthaltenden schwach konzentrierten Mischzeller erfolgt. Das Material wird über den Rang der Zentrifuge 3 hinausgedrückt. Das im Urheberschein beschriebene Verfahren geht also von einem wesentlich lösemittelfeuchteren Schrot aus als die vorliegende Erfindung und auch die Zentrifugation muß mit Werten von 120 bis 240 Sekunden bedeutend länger erfolgen als erfindungsgemäß. Dort wird auf Seite 5, erster vollständiger Absatz erläutert, daß die lösemittelärmere schrotenthaltende Phase von einer Feuchte von 25 bis 35 % auf 5 bis 20 % bei bedeutend geringeren Verweilzeiten von 0,1 bis 30 Sekunden mittels einer Schubzentrifuge vom überschüssigen Lösemittel befreit wird. Erfindungsgemäß wird also keine zusätzliche Lösemittelbefeuchtgung vor der späteren Lösemittelentfernung beabsichtigt, die offenbar mit einer einfachen zylindrischen Filterzentrifuge einer kontinuierlich betriebenen Schubzentrifuge durchgeführt werden muß. Schließlich bleibt für den Fachmann die Lehre dieser Druckschrift auch insofem unklar, wie der Schrot überhaupt von 3 nach 4 gelangen soll, da das "Material" nach oben weggedrückt werden soll. Die Frage ist nur, wohin?

Derwent Abstract 89-204761/28, eine Zusammenfassung der SU 1449573-A, betrifft eine Vorrichtung zum Abtrennen von Lösemittel aus einem Ölkuchen mit Verdampfung-, Trocknungs- und Kühlkammern mit perforierten Böden. Gemäß der einzigen konkreten Offenbarung wird die Vorrichtung in der Weise betrieben, daß ein Extraktionsstrom vertikal, das heiß von oben her ohne eine Schnecke, in eine Zentrifuge eingetragen wird. Dies ist im Gegensatz zu den erfindungsgemäß eingesetzten Schubzentrifugen, die bekanntlich nicht vertikal sondern horizontal wirken und bei denen der Eintrag des lösemittelfeuchten Extraktionsschrots über eine Schnecke erfolgt. Darüber hinaus ist es nach der Lehre von (3) zwingend erforderlich, daß der lösemittelhaltige Extraktionsschrot über eine Luftschleuse eine weitere Verdampfungskammer durchlaufen muß, um mittels Streichdampf und mittels eines Vibrationstrockners weiteres Lösemittel zu verdampfen, worauf der Extraktionsschrot schließlich in einer weiteren Trocknungskammer mit heißer Luft behandelt wird. Bei der kritischen Durchsicht dieser Vorrichtung ergibt sich, daß es sich bei den Zentrifugen nicht um eine spezielle Zentrifuge handeln kann.

Auch zu diesem Dokument hat die Anmelderin sich den entsprechenden russischen Urheberschein besorgt. Aus den bibliographischen Daten ergibt sich zunächst, daß diese Druckschrift auf dieselbe Anmelderin zurückgeht wie die vordiskutierte Druckschrift, allerdings etwa 10 Monate später eingereicht wurde. Zu der in der Vorrichtung eingesetzten Zentrifuge findet man auch im Urheberschein selbst nur wenige Angaben. Dort wird ausgeführt, daß der lösemittelfeuchte "Baumwollsaatschrot in die Zentrifuge 5 überführt wird. Durch die durch die Rotordrehung erzeugte und vom Zentrum in Richtung Peripherie wirkende Fliehkraft wird der Schrot an die Wände gedrückt und das Lösemittel durch den Festfilterrückstand und die siebartige Oberfläche des Rotors zwangsfiltriert. Dabei wird das Lösemittel aus dem Rotor gedrückt, während das teilweise vom Benzin befreite Material nach unten durch den Schleusenverschluß 6 ausgestoßen wird und in die Verdampferkammer 2 eintritt". Hieraus ergibt sich, daß auch in dieser Druckschrift die gleiche Filterzentrifuge eingesetzt wird wie in der vorgenannten Druckschrift. Im Gegensatz dazu wird erfindungsgemäß eine Zentrifuge eingesetzt, die wie vorstehend in Bezug auf das vorherige Dokument gezeigt, sowohl schneller wie auch effektiver arbeitet, da sie sowohl eine höhere Fliehkraft wie auch eine größere Zentrifugalkraft erzeugt. Insofern wird der Gegenstand des vorliegenden Patentanspruchssatzes durch diese Druckschrift für den Fachmann nicht nahegelegt.

Auch eine Kombination der vorgenannten Druckschriften führt nicht in naheliegender Weise zu einem Verfahren zur Gewinnung von Ölen oder Fetten aus ölhaltigen Naturstoffen , welches dadurch gekennzeichnet ist, daß eine Filterzentrifuge eingesetzt wird, die insbesondere ausgewählt ist aus ein- oder mehrstufigen Schubzentrifugen, Doppelschubzentrifugen, Schwingzentrifugen oder Siebschneckenzentrifugen.

Schubzentrifugen selbst werden beispielsweise eingesetzt zur Abtrennung von Wasser aus wäßrigen Dispersionen, die organische oder anorganische Stoffe enthalten. Gleitzentrifugen werden in der Technik eingesetzt, um thermoplastische Kunststoffe aus Polymersuspensionen abzutrennen. Schwingzentrifugen werden eingesetzt, um beispielsweise Wasser aus Kohleschlämmen, Salz aus Salzlösungen bzw. Sande von überschüssigem Wasser abzutrennen. Derartige Vorrichtungen werden von der Firma Sulzer Escher WYSS GmbH oder der Firma Siebtechnik GmbH vertrieben.

Der vorliegenden Erfindung liegt die Aufgabe zugrunde, im Rahmen eines Verfahrens zur Gewinnung von Ölen und Fetten aus ölhaltigen Naturstoffen, insbesondere aus pflanzlichen Rohstoffen, im Anschluß an die Extraktion die Aufarbeitung des Schrotes, d. h., insbesondere aber die Entfernung des restlichen Lösemittels aus dem Extraktionsfilterkuchen oder Schrot, technisch einfacher, schneller und weniger energieaufwendig zu gestalten.

Diese Aufgabe wird durch eine spezielle Vorrichtung in einem Verfahrensschritt, die im Rahmen der Aufarbeitung des extraktionsmittelhaltigen Schrotes eingesetzt wird, gelöst.

Gegenstand der vorliegenden Erfindung ist daher ein Verfahren zur Gewinnung von Ölen oder Fetten aus ölhaltigen Naturstoffen mit den Schritten Reinigung, gegebenenfalls Schälung, Zerkleinerung, Vorpressung oder Aufbereitung für die Extraktion, Extraktion des ölhaltigen Naturstoffs mittels eines Extraktionsmittels, Aufarbeitung der Miscella zu den entsprechenden Fetten oder Ölen und Aufarbeitung des extraktionsmittelhaltigen Extraktionsrückstands zu Schrot und/oder proteinhaltigen Konzentraten, dadurch gekennzeichnet, daß die Entfernung des Extraktionsmittels im Extraktionsrückstand durch Zentrifugation in einer Filterzentrifuge erfolgt.

Durch den Einsatz der erfindungsgemäßen Filterzentrifuge ist es möglich, den Extraktionsfilterkuchen oder Schrot in kürzester Zeit von einem Restlösemittelgehalt von etwa 25 bis 35% auf 5 bis 20%, vorzugsweise 5 - 15%, insbesondere etwa 5% zu reduzieren, wobei mit mittleren Verweilzeiten von 0,1 bis 30 sec, vorzugsweise 1 bis 20 sec und besonders bevorzugt 5 bis 15 sec gerechnet wird. Zusammen mit der anschließenden thermischen Behandlung erreicht man auf diese Weise gegenüber dem Stand der Technik wenigstens eine Halbierung der Gesamtverweilzeit bei der Aufarbeitung des Extraktionsfilterkuchens bzw. Extraktionsfilterschrotes zu den entsprechenden White Flakes oder dem entsprechenden fertigen Schrot, was einer Verdoppelung des Massendurchsatzes entspricht.

Derwent abstract 88-103760, eine Zusammenfassung der SU1333702-A, betrifft, ebenso wie die bereits vorzitierte SU1335564-A, welche auf dieselben Erfinder und dieselbe Anmelderin zurückgeht, eine Vorrichtung zur Wärmebehandlung von extrahiertem Ölsaat mit einer kontinuierlich arbeitenden Zentrifuge und einer Kühlkammer, die allerdings ebenso gestaltet ist wie der bereits auf Seite 6 der Anmeldeunterlagen diskutierte Urheberschein, wie sich durch einen Vergleich der beiden Figuren hierzu und insbesondere bezüglich der mit (13) bezeichneten kontinuierlich arbeitenden Zentrifuge ergibt. Die vorgenannte Argumentation gilt also in gleicher Weise auch für diese Druckschrift, woraus sich ergibt, daß der Gegenstand der vorliegenden Erfindung, wie beansprucht, durch diese Druckschrift nicht nahegelegt wird.

Derwent Abstract 88-088338/13, eine Zusammenfassung der JP 63039601-A, betrifft eine Extraktionsmethode für lösliche Komponenten aus einem festen Rohmaterial durch Kontaktieren eines Lösemittels in einem Zentrifugalabscheider. Wie sich allerdings aus der Zeichnung ergibt, wird diese Vorrichtung wie folgt betrieben: Während des Betriebs eines Zentrifugalabscheiders 1 wird eine Füllkammer 2 für ein festes Rohmaterial eingesetzt, bei der sich innen und außen mischende bzw. rotierende Elemente befinden und bei der das auf der Innenseite befindliche feste Rohmaterial einer Zentrifugalkraft ausgesetzt wird. Darüberhinaus wird ein Lösemittel durch Injektionslöcher 4 ausgehend von einem Lösemittelbehältnis 3 gleichmäßig auf die Innenseite des festen Rohmaterials gegeben, wobei sich nur die flüssige Komponente wie Öl löst und daraufhin die Mischung (Miszella) der löslichen Komponente aus der Außenseite mittels Zentrifugalkraft ausgetrieben wird. Bei einem derartigen Zentrifugalabscheider, wie er in dem Stand der Technik beschrieben wird, handelt es sich allerdings um eine andersartige Zentrifuge und ein andersartiges Verfahren, die sich von ihrer Wirkungsweise klar von den im kennzeichnenden Teil von Anspruch 1 beanspruchten Zentrifugentypen unterscheidet und diese auch für den Fachmann nicht nahelegt.

**GB-A-0 388 966** betrifft eine Extraktion von Fett aus fettenthaltenden Materialien mittels einer Zentrifuge, die eine Hohlkammer aufweist, die in 2 oder mehr Räume mittels eines Filters aufgeteilt sind, wobei der rotierende Hohlkörper in einer luftdicht abschließenden Weise von allen Seiten abgeschlossen ist und reines Lösemittel zugeführt und beladenes Lösemittel abgeführt wird und der rotierende Hohlkörper schließlich zwei Leitungen aufweist, die konzentrisch mit der Rotationsachse des Körpers verlaufen und mit dieser rotieren.

**US-A-3 878 232** betrifft ein Verfahren zum Erhalt eines lezithinreichen Öls aus pflanzlichen Saatmaterialien, die Fette und im wesentlichen alle wasserlöslichen Bestandteile von natürlichen Saatmaterialien enthalten, wobei dieses Verfahren folgende Schritte aufweist: Die Extraktion der fetthaltigen Komponenten aus einem pflanzlichen Saatmaterial durch Kontaktieren des Saatmateriais mit einem fettlösenden Medium, welches ein Kohlenwasserstofflösemittel und 2 - 30 Gew.% eines Monoalkohols für 80 Gewichtsteile des Kohlenwasserstofflösemittels enthält, wobei besagte Fettextraktion unter solchen Bedingungen durchgeführt wird, wobei der Alkoholgehalt bei 2 bis 40 Gew.% bezogen auf das pflanzliche Saatmaterialtrockengewicht gehalten wird, wobei im nachhinein die resultierende Fettmicella von dem pflanzlichen Saatöl getrennt wird und das aus vorgehendem Schritt erhaltene Fett in Gegenwart eines Kohlenwasserstofflösemittels, Wasser und Alkohol gemischt wird, um eine Mischung zu erhalten, wobei diese Mischung einen genügenden Anteil an Alkohole und Wasser enthält, um eine polare Phase zu erhalten, die bezogen auf das Gesamtgewicht 40 bis 70 Gew.% Alkohol aufweist, Stehenlassen der Mischung zur Abscheidung der polaren, das wasserlöslichen Extrakt enthaltenen Phase von der nichtpolaren, fettenthaltenden Phase. Abtrennung der beiden Phasen und Gewinnung des Fettkonzentrats aus der nichtpolaren Phase.

**US-A-4 211 695** betrifft ein Verfahren zur Trennung von zerkleinertem Hafer, in unterschiedliche Fraktionen, wobei dieser Prozeß folgendes beinhaltet: das Kontaktieren des zerkleinerten enthüllten Hafers mit einem organischen Lösemittel, Formung einer Aufschlämmung, wobei das Lösemittel ausgewählt ist aus Pentan, Hexan, Heptan, Cyclohexan, Alkoholen mit 1 bis 4 Kohlenstoffatomen und deren Mischungen, die in der Lage sind Haferöl aus Hafer zu extrahieren, die Bildung einer Aufschlämmung des zerkleinerten Hafers und des Lösemittels und die Zentrifugation dieser Aufschlämmung, wobei sich der Hafer in der Aufschlämmung in wenigstens zwei Fraktionen auftrennt.

Nach einer bevorzugten Ausführungsform der vorliegenden Erfindung wird das Verfahren in der Weise durchgeführt, daß die Aufarbeitung des extraktionsmittelhaltigen Extraktionsrückstandes durch Zentrifugation in einer Filterzentrifuge, gegebenenfalls Wasserdampfbehandlung, vorzugsweise im Gegenstrom, thermische Behandlung, Trocknung, Abkühlung und gegebenenfalls Pelletisierung oder Vermahlung erfolgt. Als Erzeugnis dieser Verfahrensstufe fällt Schrot oder die White Flakes an.

Ist es beabsichtigt, proteinreiche Konzentrate zu erzeugen, so wird nach einer weiteren bevorzugten Ausführungsform des vorliegenden Verfahrens im Anschluß an den vorstehenden Abkühlungsschritt eine weitere Extraktion mit einem Wasser enthaltenden Extraktionsmittel, eine Zentrifugation in der Filterzentrifuge, eine thermische Behandlung, eine Trocknung unter gleichzeitiger Kühlung und Vermahlung durchgeführt.

Vorzugsweise wird das erfindungsgemäße Verfahren bei solchen ölhaltigen Naturstoffen Verwendung finden, bei denen es sich um einen pflanzlichen Rohstoff auf Basis eines Samenfetts oder eines Fruchtfleischfettes handelt.

Unter Ölsaaten im Sinne der vorliegenden Erfindung versteht man beispielsweise aus Sojabohnen, Baumwolle, Raps, Sonnenblumen, Leinsaat, Erdnuß, Palmkern oder Kopra sowie Oliven- oder Kokosnuß gewonnene Rohstoffe.

Nach einer bevorzugten Ausführungsform der vorliegenden Erfindung wird die Extraktion vorzugsweise kontinuierlich in wenigstens einer Stufe erfolgen, und die mit Öl vorbeladene Extraktionsmittelphase oder Miscella wird im Gegenstrom zur Feststoffphase geführt.

Nach einer weiteren bevorzugten Ausführungsform wird das Restextraktionsmittel bei der Aufarbeitung der Miscella und der Aufarbeitung des Extraktionsrückstands der Extraktion wieder zugeführt.

Nach einer weiteren bevorzugten Ausführungsform wird als Filterzentrifuge vorzugsweise eine ein- oder mehrstufige Schubzentrifuge, eine Doppelschubzentrifuge, beispielsweise erhältlich bei der Ferrum GmbH, früher Salzer Escher Wyss GmbH, eine Schwingzentrifuge, eine Gleitzentrifuge oder eine Siebschneckenzentrifuge eingesetzt.

Bei dem erfindungsgemäßen Verfahren setzt man bevorzugt als Extraktionsmittel einen aliphatischen Kohlenwasserstoff mit einem Siedebereich von 55 bis 70 °C oder einen Alkohol ein, der bis zu fünf Kohlenstoffe besitzt, also beispielsweise Methanol, Ethanol, n-Propanol, i-Propanol, n-Butanol, i-Butanol, Amylalkohol und vorzugsweise Ethanol ist. Sofern das Extraktionsmittel in einer zweiten Extraktionsstufe eingesetzt wird, setzt man hierbei einen 2 bis 40 Volumenprozent, vorzugsweise 2 bis 30, 5 bis 30 Volumenprozent Wasser enthaltenden C₁ bis C₄-Alkohol, vorzugsweise einen 2 bis 40 Volumenprozent, insbesondere 2 bis 30, bevorzugt 5 bis 30 Volumenprozent Wasser enthaltenden Ethanol ein.

Gegenstand der vorliegenden Erfindung ist weiterhin die Verwendung des vorstehend genannten Verfahrens zur Erzeugung von Pflanzenölen oder Pflanzenfetten.

Weiterer Gegenstand der vorliegenden Erfindung ist die Verwendung des vorstehend genannten Verfahrens zur Erzeugung von proteinreichen Konzentraten. Derartige Konzentrate können vorzugsweise zur Tierfütterung oder zur Weiterverarbeitung in der Nahrungsmittel- und/oder pharmazeutischen Industrie eingesetzt werden.

Die vorliegende Erfindung wird nachstehend durch Flußdiagramme näher erläutert.

Es zeigen:

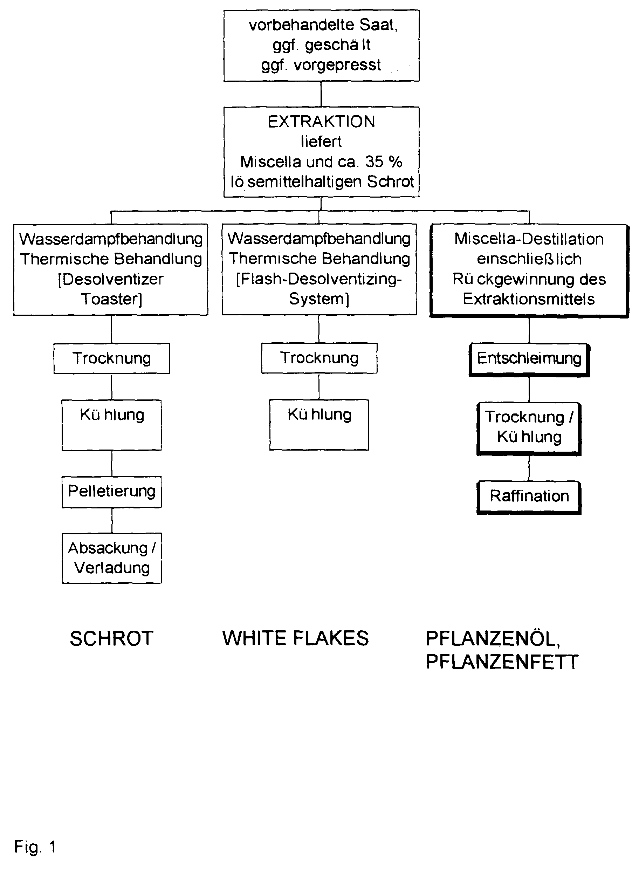

- Figur 1:: ein konventionelles Ölsaatverarbeitungsverfahren,
- Figur 2:: das erfindungsgemäße Verfahren zur Aufarbeitung des extraktionsmittelhaltigen Extraktionsrückstands,
- Figur 3:: das erfindungsgemäße Verfahren zur Erzeugung weiter aufkonzentrierter Produkte.

Bei einem konventionellen Ölsaatverarbeitungsverfahren findet man die typische Schrittfolge der Saatannahme bzw. -lagerung, Reinigung und gegebenenfalls Schälung. Bei ölreichen Saaten findet eine Vorpressung statt, ansonsten wird die Saat für die Extraktion aufbereitet. Hiernach erfolgt die Extraktion, beispielsweise in einem Karussellextraktor. Aus der Extraktion wird einerseits die Miscella erhalten, welche vom Lösemittel befreit, entschleimt, getrocknet, gekühlt und schließlich einer Raffination zugeführt wird. Der Extraktionsrückstand wird, sofern hieraus Futtermittelschrote erhalten werden sollen, zunächst einer Entbenzinierung/Toastung, dann einer Trocknung, einer Kühlung, einer Pelletierung sowie einer Absackung und Verladung unterzogen. Soll aus dem Extraktionsrückstand Protein gewonnen werden, so ist altemativ eine Spontanentbenzinierung (FDS), eine Einstellung der Proteinlöslichkeit, eine Trocknung und Kühlung erforderlich, um zu einem proteinreichen Konzentrat zu gelangen.

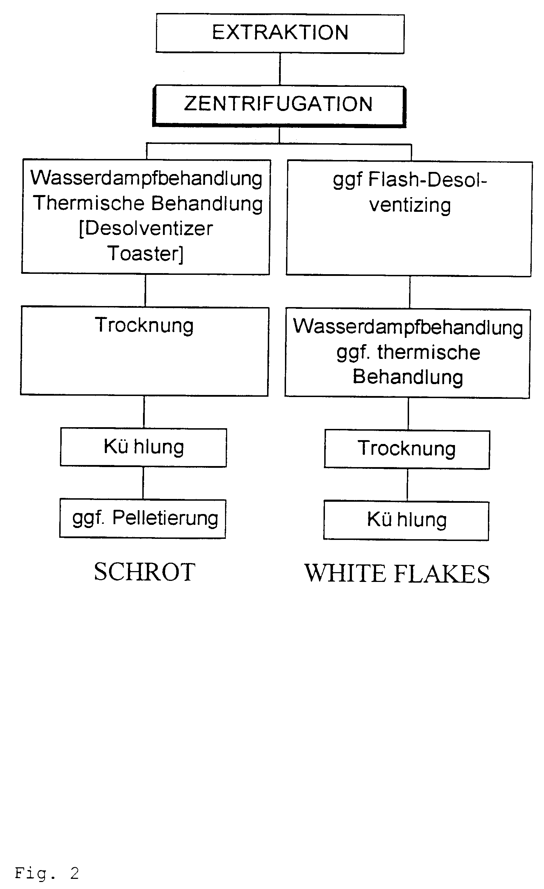

Das in Figur 2 gezeigte erfindungsgemäße Verfahren zur Aufarbeitung des lösemittelhaltigen Extraktionsrückstands bzw. Schrotes umfaßt im Anschluß an die Extraktion eine Zentrifugation, auf die, soweit eine Herstellung von Futtermitteln erfolgen soll, eine Wasserdampfbehandlung, die vorzugsweise im Gegenstrom erfolgt, gefolgt von einer thermischen Behandlung, einer Trocknung, Kühlung und Pelletierung. Im Falle eines proteinreichen Extraktionsrückstands wird eine Wasserdampfbehandlung vorzugsweise im Gegenstrom, ein sogenanntes Stripping, gegebenenfalls gefolgt von einer thermischen Behandlung unterzogen, gefolgt von einem Trocknungs- und Kühlungsschritt. Die hierbei erhältlichen Produkte werden als White Flakes bezeichnet.

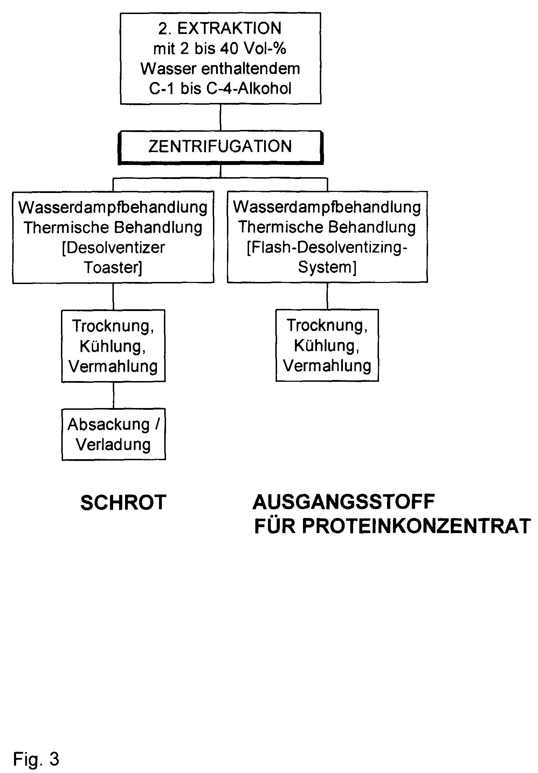

Soweit diese Produkte oder der Schrot zu proteinreichen Konzentraten aufgearbeitet werden sollen, erfolgt ein weitere Extraktionsschritt, wie aus Figur 3 ersichtlich, diesmal mit einem Wasser enthaltenden Alkohol, woran sich wiederum ein Zentrifugationsschritt anschließt, um den Lösemittelgehalt von etwa 70 % auf 5 bis 40% abzusenken, gefolgt von einer Wasserdampfbehandlung, thermischen Behandlung, Trocknung, Abkühlung durch, und man erhält auf diese Weise Ausgangsmaterialien zur Herstellung von Proteinisolaten.

## Patentansprüche

1. Verfahren zur Gewinnung von Ölen oder Fetten aus ölhaltigen Naturstoffen mit den Schritten
- Reinigung
- gegebenenfalls Schälung
- Zerkleinerung
- Vorpressung oder Aufbereitung für die Extraktion
- Extraktion des ölhaltigen Naturstoffs mittels eines Extraktionsmittels
- - Aufarbeitung der Miscella zu Fett oder Öl und
- - Aufarbeitung des extraktionsmittelhaltigen Extraktionsrückstands Schrot und/oder proteinhaltigen Konzentraten, wobei die Entfernung des Extraktionsmittels durch Zentrifugation in einer Filterzentrifuge erfolgt, dadurch gekennzeichnet, daß die Filterzentrifuge ausgewählt ist aus ein- oder mehrstufigen Schubzentrifugen, Doppelschubzentrifugen, Schwingzentrifugen oder Siebschneckenzentrifugen.

2. Verfahren nach Anspruch 1,
**dadurch gekennzeichnet**, daß die Aufarbeitung des extraktionsmittelhaltigen Extraktionsrückstands durch
- Zentrifugation in einer Filterzentrifuge,ggf. Wasserdampfbehandlung, vorzugsweise im Gegenstrom, thermische Behandlung
- Trocknung,
- Abkühlung und
- ggf. Pelletisierung oder Vermahlung
erfolgt.

3. Verfahren nach Anspruch 1 oder 2,
**dadurch gekennzeichnet**, daß im Anschluß an den vorstehenden Abkühlungsschritt eine weitere Extraktion mit einem Wasser enthaltenden Extraktionsmittel, eine Zentrifugation in der Filterzentrifuge, eine thermische Behandlung, eine Trocknung unter gleichzeitiger Kühlung und Vermahlung durchgeführt wird.

4. Verfahren nach einem der vorhergehenden Ansprüche,
**dadurch gekennzeichnet**, daß es sich bei dem ölhaltigen Naturstoff um einen pflanzlichen Rohstoff auf Basis eines Samenfetts oder eines Fruchtfleischfetts handelt.

5. Verfahren nach einem der vorhergehenden Ansprüche,
**dadurch gekennzeichnet**, daß die Extraktion vorzugsweise kontinuierlich in wenigstens einer Stufe erfolgt und die mit Öl beladene Extraktionsmittelphase oder Miscella im Gegenstrom zur Feststoffphase geführt wird.

6. Verfahren nach einem der vorhergehenden Ansprüche,
**dadurch gekennzeichnet**, daß das Restextraktionsmittel bei der Aufarbeitung der Miscella und der Aufarbeitung des Extraktionsrückstands der Extraktion wieder zugeführt wird.

7. Verfahren nach einem der vorhergehenden Ansprüche,
**dadurch gekennzeichnet**, daß es sich bei dem Extraktionsmittel um einen aliphatischen Kohlenwasserstoff mit einem Siedebereich zwischen 55 und 70 °C oder um einen Alkohol mit bis zu 5 Kohlenstoffatomen, insbesondere Ethanol, handelt, wobei in der 2. Extraktionsstufe vorzugsweise ein wenigstens 2 Vol.-% Wasser enthaltender Alkohol mit bis zu 4 Kohlenstoffatomen, vorzugsweise ein wenigstens 2 Vol.-% Wasser enthaltendes Ethanol eingesetzt wird.

8. Verwendung des Verfahrens nach Ansprüchen 1 und 4 bis 7 zur Erzeugung von Pflanzenölen oder Speisefetten.

9. Verwendung des Verfahrens nach Ansprüchen 1 bis 8 zur Erzeugung von proteinreichen Konzentraten.

10. Verwendung nach Anspruch 9 zur Tierfütterung oder Herstellung von Nahrungsmitteln, pharmazeutischen, kosmetischen oder sonstigen technischen Produkten.

## Claims

1. Process for obtaining oils or fats from oil-containing natural substances by the following steps:
- purification
- optionally peeling
- milling
- rough-pressing or reprocessing for extraction
- extraction of the oil-containing natural substance by using an extraction agent
- regeneration of the miscella to afford fat or oil, and
- regeneration of the extractant-containing extraction residue (grist or protein-containing respectively concentrates) wherein the extraction agent is removed by centrifugation in a centrifugal filter which process is characterized in that the centrifugal filter is selected from single-speed or multispeed reciprocal pusher centrifuges, twin reciprocal pusher centrifuges, oscillating centrifuges or screen-conveyor centrifuges.

2. Process according to claim 1, characterized in that the extractant-containing extraction residue is regenerated by
- centrifugation in a centrifugal filter, optionally followed by steam treatment preferably according to the counterflow principle, thermal treatment,
- drying,
- cooling, and
- optionally pelletization or milling.

3. Process according to claim 1 or 2, characterized in that the abovementioned cooling step is followed by another extraction step involving an aqueous extraction agent, centrifugation in a centrifugal filter, thermal treatment, drying accompanied by simultaneous cooling, and milling.

4. Process according to any of the preceeeding claims, characterized in that the oil-containing natural substance is a vegetable-based raw material derived from seed fat or fruit pulp fat.

5. Process according to any of the preceeding claims, characterized in that the extraction step is preferably performed continuously in at least one step, and that the oil-containing extractant phase or miscella is conveyed to the solid phase according to the counterflow principle.

6. Process according to any of the precceeding claims, characterized in that the residual extraction agent, during regeneration of the miscella and regeneration of the extraction residue, is returned to the extraction cycle.

7. Process according to any of the preceeding claims, characterized in that the extractant is an aliphatic hydrocarbon with a distillation range between 55 and 70°C; an alcohol with up to 5 carbon atoms, especially ethanol, wherein in the second extraction step preferably an alcohol solution containing at least 2 vol% water having up to 4 carbon atoms should be employed, preferably ethanol containing at least 2 vol% water.

8. Use of the process of claims 1 and 4 to 7 for obtaining vegetable oils or edible fats.

9. Use of the process of claims 1 to 8 for obtaining high-protein concentrates.

10. Use of the process of claim 9 for livestock feed or for the production of food, pharmaceuticals, cosmetics or other technical products.

## Revendications

1. Procédé pour l'extraction d'huiles et de graisses des matières naturelles contenant de l'huile comprenant les étapes
- lavage
- le cas échéant, éplucher
- broyage
- pressage préliminaire ou préparation pour l'extraction
- extraction de la substance naturelle contenant de l'huile au moyen d'un produit d'extraction
- transformation du mélange en graisse ou huile et
- Transformation des restes d'extraction contenant du produit d'extraction, la grenaille et /ou des concentrés contenant des protéines, tout en procédant à l'enlèvement du produit d'extraction par centrifugation dans centrifugeuse de filtrage, caractérisé en ce que la centrifugeuse de filtrage est sélectionnée parmi des centrifugeuses à poussoir à un ou plusieurs étages, des centrifugeuses à poussoir doubles, des centrifugeuses à vibrations ou des centrifugeuses à vis sans fin à tamis.

2. Procédé selon revendication 1, caractérisé en ce que le traitement des restes d'extraction contenant du produit d'extraction est réalisé par
- centrifugation dans une centrifugeuse de filtrage, le cas échéant avec traitement hydrothermal, de préférence en contre-courant, avec traitement thermique,
- séchage,
- refroidissement et
- le cas échéant, pelletisation ou broyage.

3. Procédé selon revendication 1 ou 2, caractérisé en ce que à la suite de l'étape de refroidissement précédente, une autre extraction est réalisée avec un produit d'extraction contenant de l'eau, suivie d'une centrifugation dans une centrifugeuse de filtrage, d'un traitement thermique, d'un séchage avec simultanément refroidissement et broyage.

4. Procédé selon l'une de quelconque des revendications précédentes, caractérisé en ce que la substance naturelle contenant de l'huile est une matière brute végétale à base de graisse de graines ou de graisse de pulpe.

5. Procédé selon l'une de quelconque des revendications précédentes, caractérisé en ce que l'extraction est effectuée de préférence continuellement au cours d'une étape au moins, et que la phase du produit d'extraction préchargée d'huile ou le mélange sont réalisés en contre-courant par rapport à la phase des matières solides.

6. Procédé selon l'une des revendications précédentes, caractérisé par le fait que le produit d'extraction restant est réutilisé pour le traitement du mélange et le traitement des restes de l'extraction.

7. Procédé selon l'une des revendications précédentes caractérisé en ce que le produit d'extraction est un hydrocarbure aliphatique avec un intervalle d'ébullition de 55 à 70°C, ou un alcool qui possède jusqu'à cinq atomes de carbone, en particulier l'éthanol, ou dans la 2ème étape d'extraction, il est utilisé de préférence un alcool avec jusqu'à 4 atomes de carbones contenant de l'eau avec un pourcentage volumique d'au moins 2, de préférence, de l'éthanol contenant de l'eau avec un pourcentage volumique d'au moins 2.

8. Utilisation du procédé selon les revendications 1 et 4 à 7 pour la production d'huiles végétales ou de graisses alimentaires.

9. Utilisation du procédé selon les revendications 1 à 8 pour la production de concentrés riches en protéines.

10. Utilisation selon revendication 9 pour l'alimentation des animaux ou la fabrication de produits alimentaires, pharmaceutiques, cosmétiques ou d'autres produits techniques.
